# EUROPÄISCHE PATENTSCHRIFT

(11) **EP 1 716 060 B1**
(45) Veröffentlichungstag und Bekanntmachung des Hinweises auf die Patenterteilung: **18.07.2007**
(21) Anmeldenummer: 05707374.4
(22) Anmeldetag: 14.02.2005
(51) Int. Cl.: B65G 1/04, B65G 1/137

(54) **VERFAHREN UND SYSTEM ZUM BEDIENEN EINES REGALS IN EINER KOMMISSIONIERANLAGE**
METHOD AND SYSTEM FOR OPERATING A SHELF IN A COMMISSIONING SYSTEM
PROCEDE ET SYSTEME POUR SE SERVIR D'UN RAYON DANS UN DISPOSITIF DE PREPARATION DES COMMANDES

(30) Priorität: 16.02.2004 DE 102004007412
(43) Veröffentlichungstag der Anmeldung: 02.11.2006
(73) Patentinhaber: Knapp Logistik Automation GmbH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2005/001467
(87) Internationale Veröffentlichungsnummer: WO 2005/077788

(56) Entgegenhaltungen:
- WO-A-03/010074
- US-A- 3 746 189

## Beschreibung

Die Erfindung betrifft ein Verfahren und ein System zum Bedienen eines Regals in einer Kommissionieranlage, mit einem Regal und zugeordnetem Regalbediengerät zur Aus- und Einlagerung von Behältern, Tabletts oder dergleichen aus dem bzw. in das Regal, wobei ein mehrere übereinander angeordnete Regalebenen aufweisender Höhenbereich des Regals als selbständige Regaleinheit über zumindest ein mechanisch angekoppeltes längsverstellbares Regalbediengerät bedient werden kann, und zumindest zwei selbständige Regaleinheiten bei einem einzigen Regal vorgesehen sind.

Soweit im folgenden von "Behältern" der Rede ist, so soll dies nicht einschränkend verstanden werden; vielmehr umfaßt die vorliegende Erfindung auch solche Systeme, in denen andere Transporteinheiten wie beispielsweise Tabletts oder Paletten verwendet werden, um das Kommissioniergut zu lagern und zu transportieren, oder das vorzugsweise große Kommissioniergut ohne Behälter selbst.

Gemäß einem bekannten Stand der Technik nach WO 03/010074A wird ein mehrere übereinander angeordnete Regalebenen aufweisender Höhenbereich des Regals über ein eigenes mechanisch angekoppeltes höhen- und längsverstellbares separates Regalbediengerät bedient. In jedem als selbständige und abgeschlossene Regaleinheit ausgebildeten Höhenbereich des Regals werden hierbei in einer niveaugleichen Pufferzone als Schnittstelle nach außen Behälter, Tabletts oder dergleichen zwischengelagert, welche vom Regalbediengerät für eine Einlagerung übernommen oder für eine Auslagerung abgegeben werden und über zumindest einen Lift und/oder eine Förderverbindung von oder zu einem regalexternen Fördersystem oder Bearbeitungsplatz gefördert werden. Die Pufferzone speichert die Produkte solange, bis sie vom Liftsystem übernommen werden können. Dadurch kann eine sehr flexible Schnittstelle mit der regalexternen Fördertechnik geschaffen und insbesondere eine hohe Kommissionierleistung eingerichtet werden.

Von Nachteil jedoch ist, daß aufgrund des Einsatzes einer größeren Anzahl an doch gewichtigen und komplizierten Regalbediengeräten, welche letztlich für eine hohe Kommissionierleistung sorgen, hohe Realisierungskosten eines Regals entstehen. Außerdem sind hohe Regalhöhen im Regalbau aufgrund des statischen Gesamtgewichts bei schlanker Bauweise des Regals nur bedingt möglich. Hohe Bauhöhen sind schon aufgrund der Einwirkung von statischen und dynamischen Gesamtkräften aller Regalbediengeräte nur bedingt möglich.

Der Erfindung liegt die Aufgabe zugrunde, das eingangs genannte bekannte Verfahren und System bei im wesentlichen Beibehaltung oder sogar Steigerung der Effizienz deutlich einfacher zu gestalten.

Wesen des erfindungsgemäßen Verfahrens und Systems zum Bedienen eines Regals ist, daß das mechanisch angekoppelte längsverstellbare Regalbediengerät, welches einen mehrere übereinander angeordnete Regalebenen aufweisenden Höhenbereich des Regals als selbständige Regaleinheit bedient, von einer Regaleinheit in eine andere Regaleinheit des gleichen Regals oder eines anderen Regals umgesetzt wird bzw. transportiert werden kann.

Damit bleibt die Effizienz des bekannten Verfahrens grundsätzlich erhalten, da sämtliche Regalbediengeräte - weniger Geräte als nach dem Stand der Technik - gerade dort bzw. in denjenigen Regaleinheiten eingesetzt werden, wo sie gerade benötigt werden. Verlangt eine Regaleinheit, welche dort gerade zu wenige Geräte im Einsatz hat, aufgrund des dort erhöhten Umsatzes an Kommissioniergut ein zusätzlich Gerät, so wird erfindungsgemäß ein weiteres Regalbediengerät dorthin transportiert und zusätzlich eingesetzt.

Insbesondere wird ein Regalbediengerät in eine andere Regaleinheit umgesetzt, wenn dort noch kein gleichgeartetes Regalbediengerät vorhanden ist und dort gerade kommissioniert werden soll.

Zweckmäßigerweise wird das vorzugsweise mit dem Regal über Horizontalschienen angebundene und längsgeführte Regalbediengerät über einen Vertikallift, vorzugsweise an einem Längsende des Regals, von der einen Regaleinheit in eine andere Regaleinheit vertikal transportiert.

Das Regalbediengerät kann aber auch in vorteilhafter Weiterbildung der Erfindung von einem Regal zu einem anderen Regal vorzugsweise in einer vom Regalboden beabstandeten Höhenlage auf einer Horizontalbahn zwischen den Regalen horizontal verfahren oder zusammen mit der Horizontalbahn horizontal versetzt werden, wobei zweckmäßigerweise auch die Horizontalbahn vertikal verfahrbar und in jeder Höhenlage einer Regaleinheit, vorzugsweise ausgerichtet zu den dortigen Horizontalschienen der Regale, positionierbar ist.

Ein in der Höhe ausfahrbares Regalbediengerät kann vor einem Umsetzen gegebenenfalls in eine kompakte flache eingefahrene Stellung gebracht werden.

Das Regalbediengerät wird entweder vor einem Umsetzen mit Behältern oder Tabletts bestückt, welche zusammen mit dem Regalbediengerät umgesetzt und nach einem Umsetzen des Regalbediengeräts in der anderen Regaleinheit eingebracht oder umgekehrt abgegeben werden, oder in alternativer Ausgestaltung erst nach einem Umsetzen mit Behältern oder Tabletts in der anderen Regaleinheit bestückt, wobei die einzubringenden Behälter oder Tabletts über separate Fördermittel, vorzugsweise über einen Transportlift auf der anderen dem Vertikallift abgewandten Längsende des Regals, erst separat zur anderen Regaleinheit transportiert und erst dann in der anderen Regaleinheit von dem Regalbediengerät für ein Einbringen in der anderen Regaleinheit Übernommen oder umgekehrt abgegeben werden.

Durch ein vorzugsweise am Gassen-Ende angeordnetes Liftsystem ist es also möglich, ein mehrere übereinander angeordnete Regal-Einzelebenen (Einzelgassen) bedienbares Regalbediengerät aus einer horizontalen Gasse bzw. Regaleinheit bei Bedarf in eine andere horizontale Gasse (andere Regaleinheit) umzusetzen, vorzugsweise vertikal zu transportieren. Auf diese Weise können die Regalbediengeräte eine vergleichsweise geringe vertikale Masthöhe aufweisen, und gleichwohl kann eine große Bauhöhe eines Regals in einem Warenlager in einem Gebäude realisiert werden. Insbesondere ergibt sich mit Vorteil eine Kostenreduktion durch eine durchsatzabhängige Anzahl an Regalbediengeräten im Vergleich zur Anzahl der Einzelebenen (d. h. der übereinander angeordnete Gassen im Regalsystem, welche mit einem Regalbediengerät bedient werden). Eine hohe Bauhöhe im Regalbau ist möglich, weil die dynamischen und statischen Gesamtkräfte durch Minimierung der Regalfahrzeuge, welche übereinander bewegt werden, minimiert sind. Im weiteren besteht auch die Möglichkeit, die Fahrzeuge ab einer gewissen Ebene bzw. gewissen Höhe einer Regaleinheit aufgrund der dynamischen Belastungen auf das Regal mit geringerer Beschleunigung und Geschwindigkeit zu betreiben. Das Umsetzen ist sowohl mit Produkten wie auch ohne Produkte am Lastaufnahmemittel des Regalbediengeräts möglich, welches innerhalb einer Regaleinheit über die gesamte Höhe der Regaleinheit vorzugsweise längs eines Vertikalmastes höhenverstellbar ist.

Die Innovation besteht mit Vorteil darin, daß sich die Aspekte der Wirtschaftlichkeit in Bezug auf Durchsatz und Kosten optimal auf die Bedürfnisse einer Benutzungsperson bzw. eines Kunden des Herstellers derartiger Regalbediensysteme abstimmen lassen.

Die Erfindung wird nachfolgend anhand von Ausführungsbeispielen unter Bezugnahme auf die beigefügten Zeichnungen näher erläutert; es zeigen:
- Figur 1: ein erfindungsgemäßes Regalbediensystem mit zwei Regalen einer Kommissionieranlage in einer schematischen perspektivischen Ansicht, mit dazwischenliegender Regalgasse, in welcher Regalbediengeräte in unterschiedlichen Regalhöhen betrieben werden,
- Figur 2: das Regalbediensystem mit einem Regalbediengerät nach Figur 1 in größerer Einzelheit im Bereich eines Vertikalliftes,
- Figuren: 3, 4, 5 und 6 das Regalbediensystem nach Figur 1 bei einem Umsetzen eines Regalbediengeräts aus einer Regaleinheit über den Vertikallift in eine andere unmittelbar darüberliegende Regaleinheit,
- Figuren: 7, 8 und 9 ein Regalbediensystem mit einem Regalbediengerät nach Figur 1 bei einem horizontalen Umsetzen zwischen zwei Regalen in Höhe einer Regaleinheit, und
- Figuren: 10 bis 15 das erfindungsgemäße Regalbediensystem mit einem anderen Regalbediengerät in Darstellungen ähnlich den Figuren 1 bis 6.

Nach den Zeichnungen umfaßt ein Regalbediensystem zum Bedienen eines Regals in einer Kommissionieranlage ein Regal 1 und im Regal angeordnete bzw. dem Regal zugeordnete Regalbediengeräte 2 zur Aus- und Einlagerung von Behältern 3, Tabletts oder dergleichen aus dem bzw. in das Regal.

Das Regal 1 weist mehrere übereinander angeordnete selbständige Regaleinheiten I, II, III, IV auf, wobei jede Regaleinheit in mehrere übereinander angeordnete Regalebenen a, b, c, d unterteilt ist. In jeder Regaleinheit I, II, III, IV befinden sich bodenseitig und deckenseitig längs der Regalfront verlaufende angebundene Horizontalschienen 10, auf welchen Regalbediengeräte 2 kippfest, d. h. längs und seitlich geführt, horizontal in Längsrichtung L verfahren werden können. Die Regalbediengeräte 2 sind mithin mechanisch am Regal 1 angekoppelt und insbesondere nicht nur längs der Regalfront längsverstellbar, sondern jedes einzelne Regalbediengerät auch hinsichtlich ihres Lastaufnahmemittels (7) höhenverstellbar, um innerhalb einer Regaleinheit I, II, III oder IV auch die unterschiedlich hohen Regalebenen a, b, c, d erreichen bzw. bedienen zu können.

Im besonderen kann jedes Regalbediengerät 2 von einer Regaleinheit I; II; III bzw. IV in eine andere Regaleinheit II, III, IV bzw. I, III, IV bzw. I, II, IV bzw. I, II, III des gleichen Regals 1 oder eines anderen Regals 1' umgesetzt, d.h. horizontal und vertikal verfahren oder verschoben werden, in der Praxis insbesondere dann, wenn in der andere Regaleinheit, die zu kommissionieren ist, gerade kein Regalbediengerät 2 vorhanden ist.

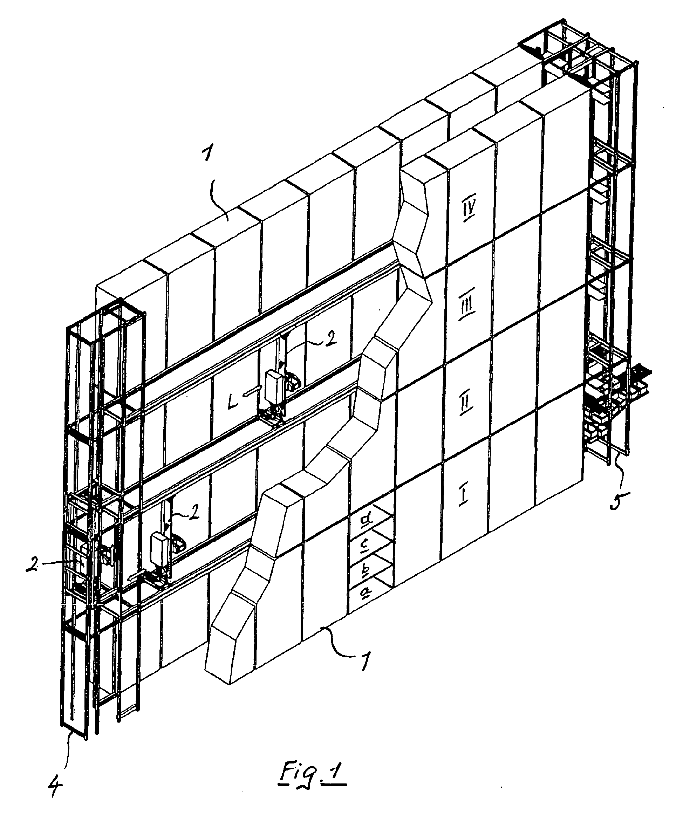

Das Regalbediengerät 2 wird über einen Vertikallift 4 von der einen Regaleinheit in eine andere Regaleinheit vertikal transportiert wird. Der Vertikallift 4 befindet sich an dem gemäß Figur 1 linken Längsende des Regals 1. An dem anderen Längsende des Regals 1 befindet sich ein Transportlift 5, auf den später noch eingegangen wird.

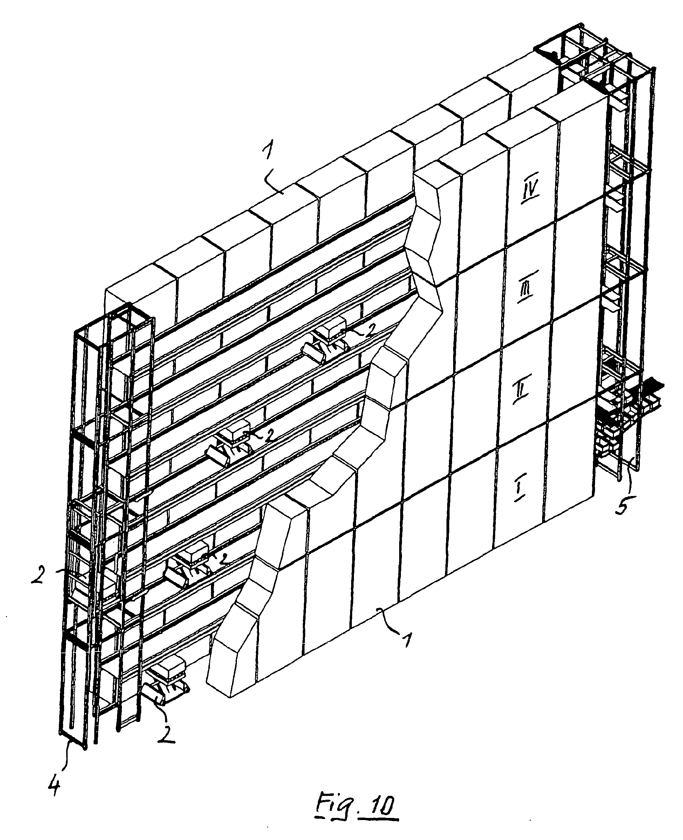

Das Regalbediengerät 2 kann in bevorzugter Variante auch von einem Regal 1 zu einem anderen Regal 1' vorzugsweise in einer vom Regalboden beabstandeten Höhenlage h auf einer Horizontalbahn 6 zwischen den Regalen 1, 1' horizontal in Querrichtung Q bezogen auf die Längserstrechung der Horizontalschienen 10 verfahren oder verschoben werden, wie dies den Figuren 7 bis 9 zu entnehmen ist.

Auch die Horizontalbahn 6 kann gegebenenfalls vertikal verfahren werden.

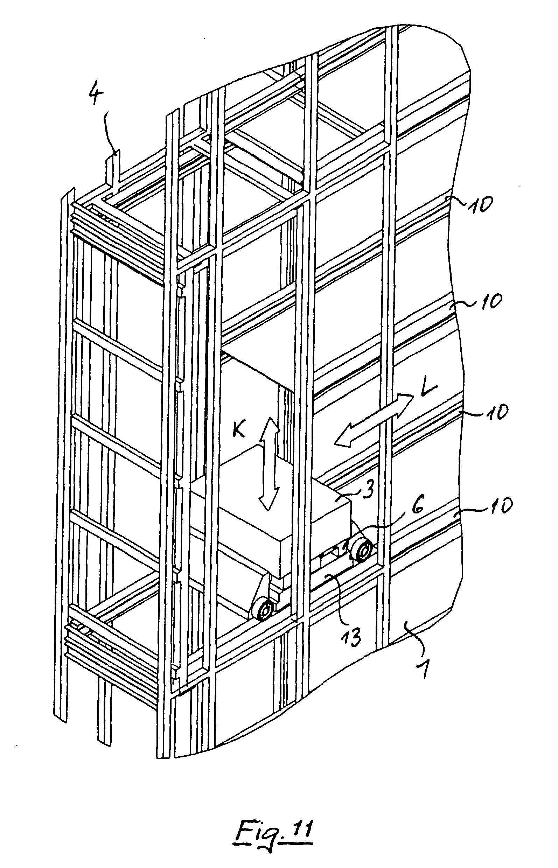

Ein in der Höhe ausfahrbares Regalbediengerät 2 kann gegebenenfalls vor einem Umsetzen in eine kompakte flache eingefahrene Stellung K gebracht werden, wie dies den Figuren 10 bis 15 zu entnehmen ist.

Das Regalbediengerät 2 kann vor einem Umsetzen mit Behältern 3 oder Tabletts bestückt werden, welche zusammen mit dem Regalbediengerät umgesetzt und nach einem Umsetzen des Regalbediengeräts in der anderen Regaleinheit eingebracht werden, oder umgekehrt abgegeben werden.

Alternativ kann aber auch das Regalbediengerät 2 erst nach einem Umsetzen mit Behältern 3 oder Tabletts in der anderen Regaleinheit bestückt werden, wobei die einzubringenden Behälter 3 oder Tabletts über separate Fördermittel, und zwar unter Verwendung des vorgenannten Transportlifts 5, erst separat zu der anderen Regaleinheit transportiert und erst dann in der anderen Regaleinheit von dem Regalbediengerät 2 für ein Einbringen in der anderen Regaleinheit Übernommen werden, oder umgekehrt abgegeben werden.

Das erfindungsgemäße Regalbediensystem kennzeichnet sich also insbesondere durch eine Umsetzvorrichtung mit einem Vertikallift 4 für ein Umsetzen des Regalbediengeräts 2 von einer Regaleinheit I, II, III bzw. IV in eine andere Regaleinheit II, III, IV bzw. I, III, IV bzw. I, II, IV bzw. I, II, III des gleichen Regals 1 oder eines anderen Regals 1', wobei der Vertikallift 4 im Bereich des einen Längsendes des Regals 1 angeordnet ist.

Der Vertikallift 4 weist Halte- und Feststellmittel für ein aufzunehmendes höhenzuversetzendes Regalbediengerät 2 auf.

Insbesondere besitzt der Vertikallift 4 und/oder jedes dem Vertikallift zugewandte Längsende einer jeden Regaleinheit I, II, III, IV Arretierungsmittel, welche eine Regaleinheit 2 gegenüber dem Vertikallift 4 für eine sichere Aufnahme eines Regalbediengerätes in der Regaleinheit absperren, wenn der Vertikallift in anderer Höhenlage betrieben ist.

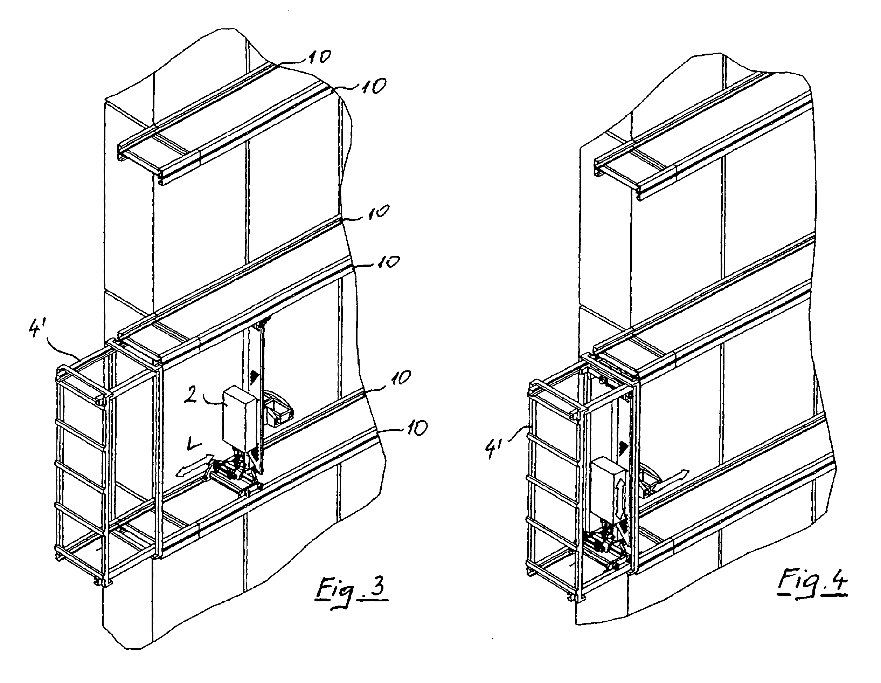

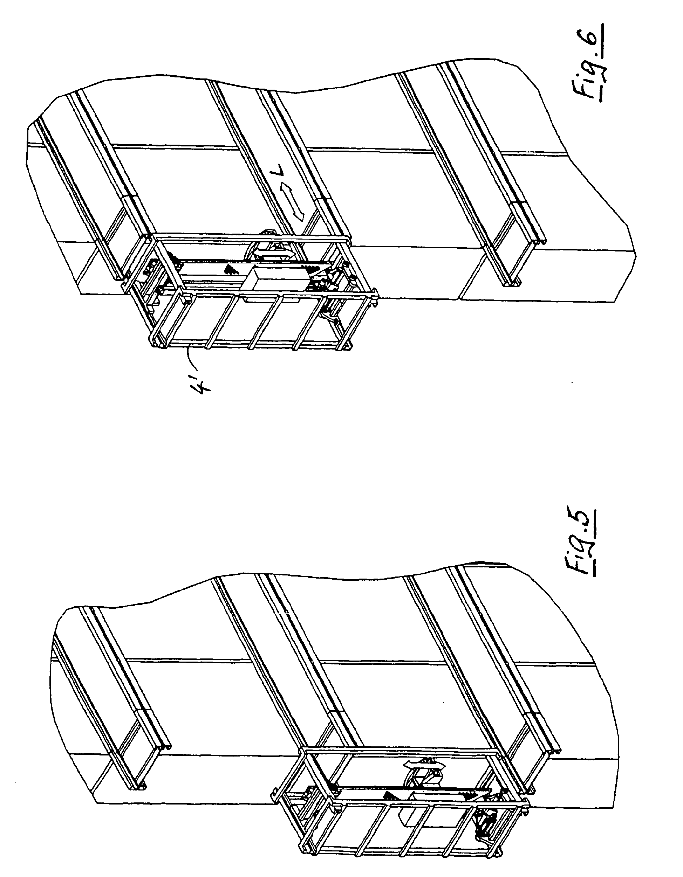

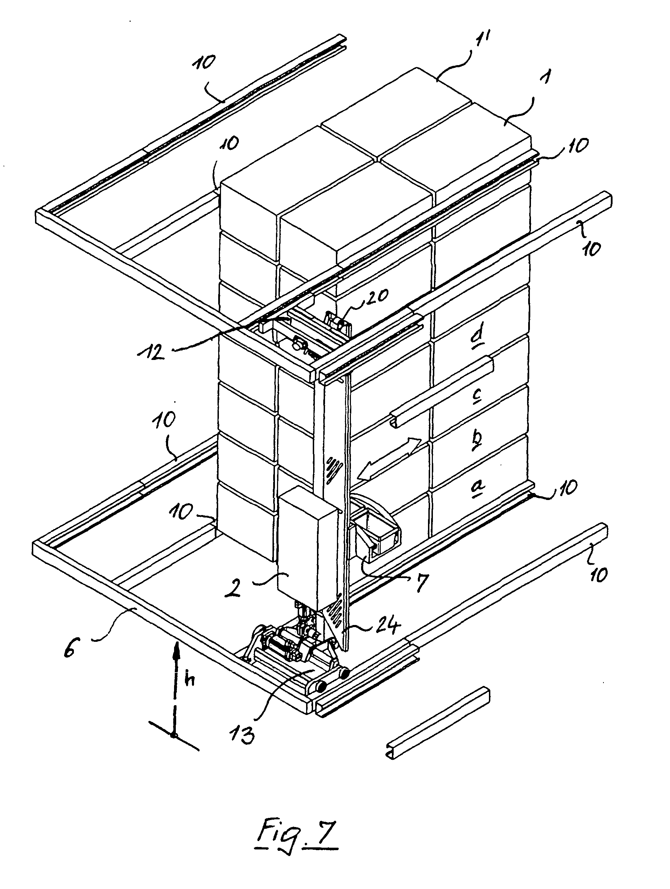

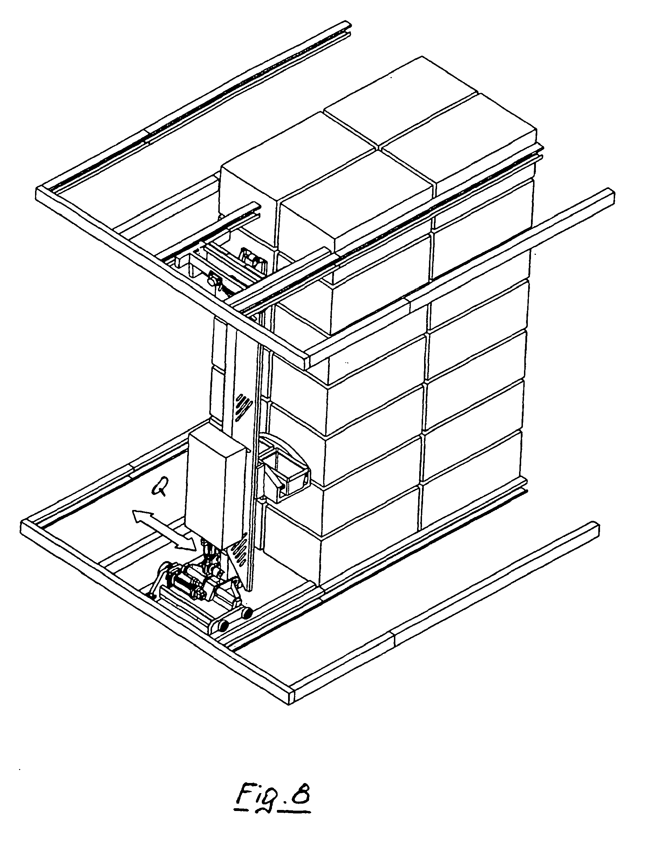

Der Vertikallift 4 erstreckt sich über die gesamte Höhe des Regals 1 und umfaßt einen Liftkäfig 4' zur Aufnahme eines Regalbediengeräts 2 ähnlich einer Personenaufzug-Kabine, welcher zwischen zwei übereinander angeordneten Regaleinheiten I, II, III, IV höhenversetzbar und in Höhe der ausgewählten Regaleinheit bezüglich der dortigen Horizontalschienen 10 in exakter Ausrichtung zu den dortigen Horizontalschienen 10 in dichtem horizontalen Abstand positionierbar ist, wie dies insbesondere den Figuren 3 bis 6 zu entnehmen ist.

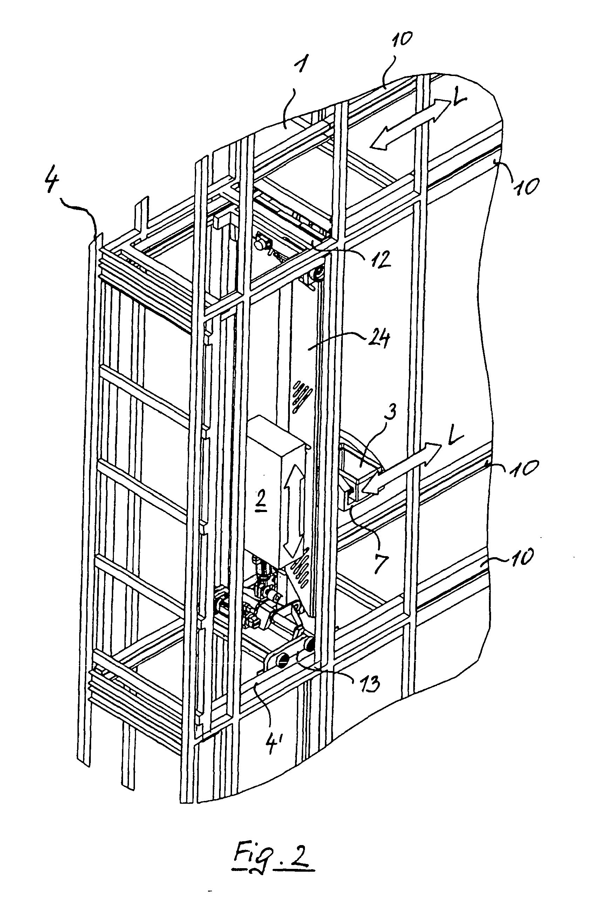

Das Regalbediengerät 2 nach den Figuren 1 bis 9 weist untere und obere Fahrwerke 12, 13 auf, welche in den festen Horizontalschienen 10 in den Ebenen der Regaleinheiten I, II, III, IV kippsicher längs einer Regalfront verfahrbar sind. Das Regalbediengerät 2 besitzt einen Vertikalmast 24 zwischen dem oberen und unterem Fahrwerk 12, 13, wobei längs des Vertikalmastes 24 ein höhenverstellbares Lastaufnamemittel 7 für Behälter 3 oder Tabletts vorgesehen ist. Der Vertikalmast kann ein Knickgelenk 20 aufweisen, welches ein Auslenken des Masts in Richtung des Längsverfahrens L ermöglicht, wobei das Knickgelenk 20 im Bereich des oberen Fahrwerks 12 des Regalbediengeräts 2 vorgesehen ist. Der Vertikalmast 24 erstreckt sich über die Höhe einer Regaleinheit I, II, III, IV.

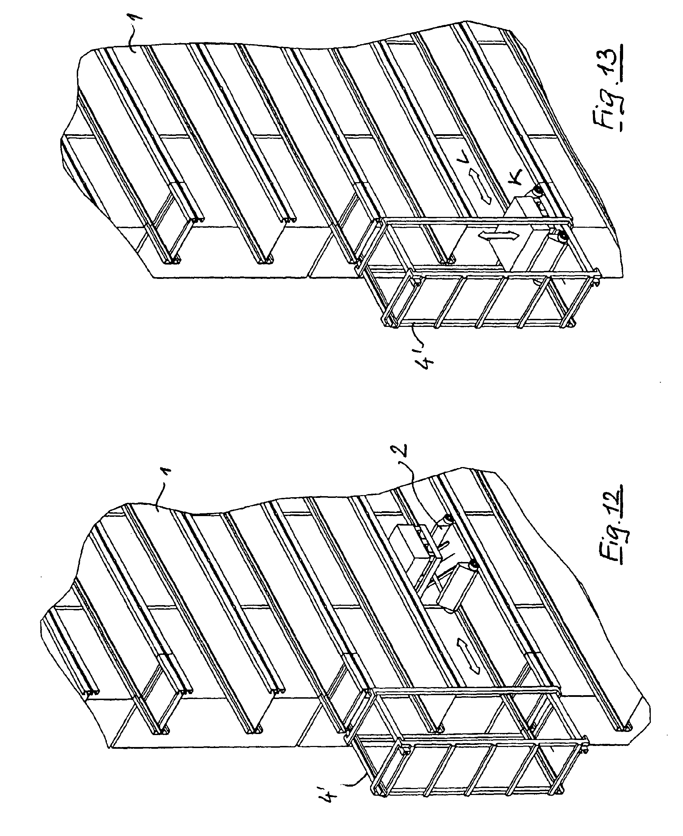

In alternativer Ausgestaltung ist gemäß den Figuren 10 bis 15 ein in der Höhe ausfahrbares Regalbediengerät 2 mit einem höhenversetzbaren Hubtisch 6 vorgesehen, welcher vor einem Umsetzen in eine kompakte flache Stellung K eingefahren wird und nur ein unteres Fahrwerk 13 aufweist. Die kompakte Einfahrstellung ermöglich ein einfaches Verfahren bzw. Umsetzen in einem höhenverstellbaren Liftkäfig 4' im Vertikallift 4. Bei dieser Ausführungsvariante erübrigen sich die oberseitigen Horizontalschienen 10 der ersten Ausführungsvariante. Ansonsten erfolgt das Umsetzen von einer Regaleinheit in eine andere Regaleinheit gemäß den Figuren 12 bis 15 wie das Umsetzen eines Regalbediengeräts 2 der ersten Ausführungsvariante gemäß den Figuren 3 bis 6.

Es ist also der Vertikallift 4 vorzugsweise am Gassenende angeordnet, welcher sämtliche Gassenebenen oder einen Teil der Gassenebenen derart miteinander verbindet, daß ein Umsetzen der Gassenfahrzeuge von einer Gassenebene in eine andere möglich ist. Sämtliche Umsetzbewegungen werden mittels am Gassenfahrzeug befindlichen Antrieben durchgeführt. Gegebenenfalls können alle Antriebe oder einige Antriebe auch regalseitig vorgesehen sein. Auch kann die Zieh- bzw. Überschiebebewegung eines Regalbediengeräts mit Hilfe von Aktoren erfolgen, welche am Liftsystem befestigt sind.

Im einzelnen erfolgt der Umsetzvorgang eines Regalbediengeräts 2 nach beiden Ausführungsvarianten wie folgt.

Gemäß den Figuren 3 bzw. 12 bewegen sich die Regalbediengeräte 2 in der jeweiligen Gassenebene bzw. Regaleinheit in Längsrichtung L des Regals. Für einen Umsetzvorgang in eine neue Gassenebene bzw. in eine andere Regaleinheit bewegt sich das Regalbediengerät in den jeweiligen Endbereich der Gassenebene, in den Ausführungsbeispielen nach links.

Nachdem der Vertikalkäfig 4' nachvollziehbar in der richtigen Ebene bzw. Regaleinheit positioniert hat - dieser Vorgang kann natürlich auch schon vor dem Anfahren des Regalbediengeräts 2 an die Endposition durchgeführt werden, wird die Sicherheitseinrichtung am Gassenende entriegelt bzw. deaktiviert, und das Regalbediengerät kann gemäß den Figuren 4 bzw. 13 auf den Umsetzer überfahren. Nach dem Überfahren wird das Regalbediengerät am Vertikallift 4 gegen ein Herausfahren aus dem Liftkäfig 4' verriegelt.

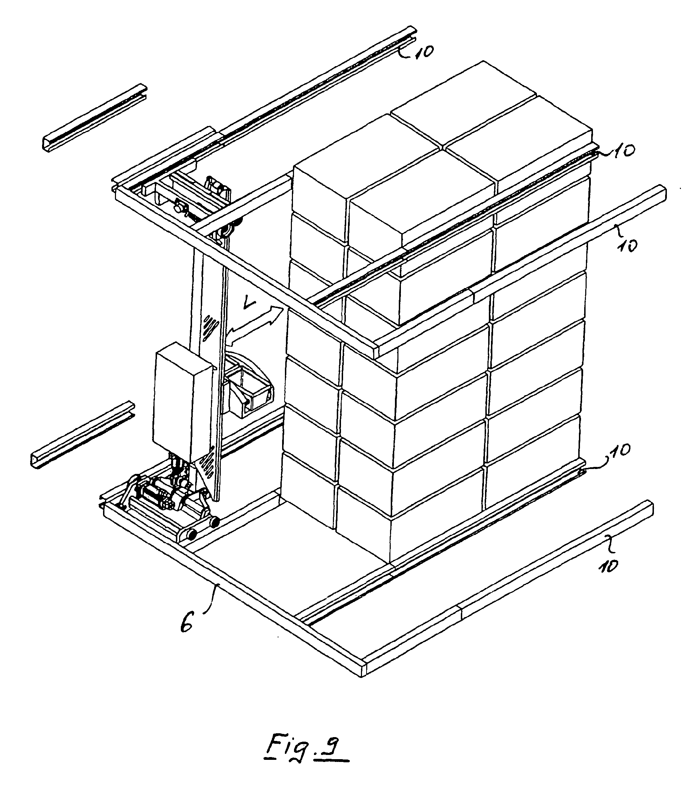

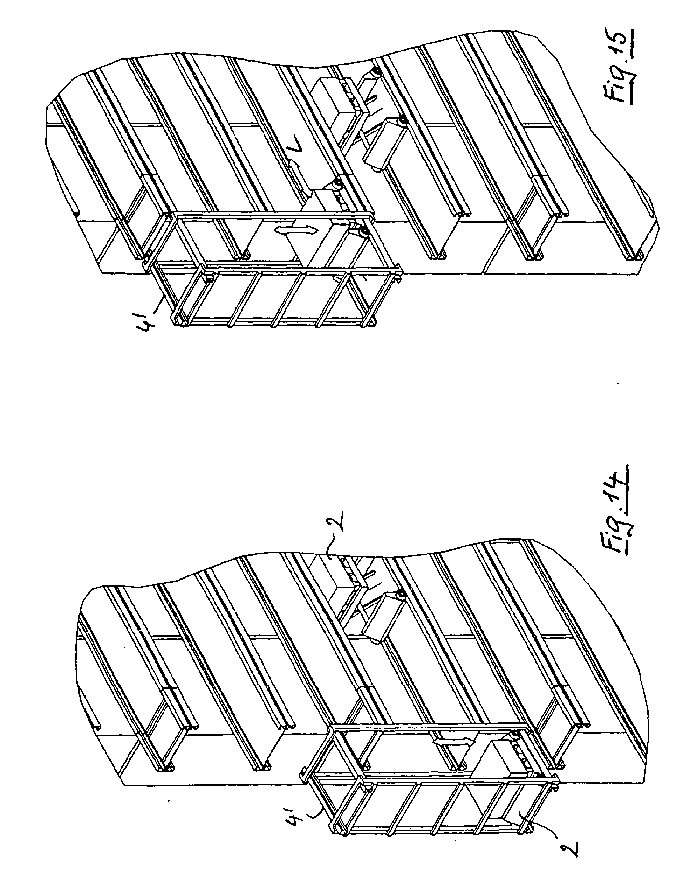

Nachdem das Regalbediengerät 2 vollständig in den Liftkäfig 4' auf die dortigen Verlängerungsschienen, die sich in exakter Ausrichtung zu den Horizontalschienen 10 der entsprechenden Gassenebene bzw. der entsprechenden Regaleinheit befinden, bewegt sich gemäß den Figuren 5 bzw. 14 der Liftkäfig 4' zusammen mit dem aufgenommenen gesicherten Regalbediengerät 2 vertikal im Vertikallift 4 in die vorgesehene neue Gassenebene.

Nach Erreichen der Zielposition gemäß den Figuren 6 bzw. 15 in exakter Ausrichtung der Verlängerungsschienen des Liftkäfigs 4' mit den neuen dicht beabstandeten Horizontalschienen 10 der neuen Ebene bzw. Regaleinheit, fährt das Regalbediengerät 2 in die neue Gassenebene. Danach wird die Sicherheitseinrichtung für das Gassenende wieder aktiviert, und das Regalbediengerät kann den Betrieb in der neuen Ebene bzw. in der neuen Regaleinheit aufnehmen.

Bei der Erfindung besteht mit der wesentlichste Vorteil darin, daß sich die Aspekte der Wirtschaftlichkeit in Bezug auf Durchsatz und Kosten optimal auf die Bedürfnisse einer Benutzungsperson bzw. eines Kunden des Herstellers derartiger Regalbediensysteme abstimmen lassen.

Dies sei gesamtheitlich an einem Beispiel erklärt:

Ein Regal mit einer Höhe von ca. 30m besteht aus 7 Ebenen (Regaleinheiten) mit jeweils 8 Behälterplätzen (Regalebenen) übereinander. Somit gibt es übereinander 56 Behälterpositionen, die in 7 vorzugsweise gleich hohen Ebenen- bzw. Gassenabschnitten unterteilt sind. Diese 7 Ebenen werden nun durch z. B. 4 Regalbediengeräte bedient. Jedes dieser 4 Fahrzeuge bedient in der einzelnen Ebene (Gasse) die 8 Behälterplätze übereinander. Um mit diesen 4 Fahrzeugen die gesamte Ebenenanzahl bedienen zu können, werden die Fahrzeuge mittels eines Liftsystems umgesetzt. Dieses Umsetzsystem ist vorzugsweise am Ende der Gasse, rechts und/oder links, angeordnet, kann aber auch in der Regalmitte bzw. Gassenmitte vorgesehen sein. Ersichtlich können also die erfindungsgemäßen 4 Regalbediengeräte eine vorgegebene Kommissionierleistung erbringen, die nach dem Stand der Technik von 7 Regalbediengeräten (in jeder Ebene 1 Regalbediengerät) bewerkstelligt wird. Es ist nämlich davon auszugehen, daß in aller Regel nicht alle Regalbediengeräte gleichzeitig im Kommissioniereinsatz sind. Durch Einsparung von 3 Regalbediengeräten kann also das Regal insgesamt entsprechend leichtgewichtig und kostengünstig gebaut und/oder eine hohe Regalhöhe eingerichtet werden.

## Patentansprüche

1. Verfahren zum Bedienen eines Regals vorzugsweise in einer Kommissionieranlage, mit einem Regal (1) und zugeordnetem Regalbediengerät (2) zur Aus- und Einlagerung von Behältern (3), Tabletts oder dergleichen aus dem bzw. in das Regal, wobei ein mehrere übereinander angeordnete Regalebenen (a, b, c, d) aufweisender Höhenbereich des Regals (1) als selbständige Regaleinheit (I, II, III bzw. IV) über zumindest ein mechanisch angekoppeltes längsverstellbares Regalbediengerät (2) bedient werden kann, und zumindest zwei selbständige Regaleinheiten (I, II, III bzw. IV) vorgesehen sind,
**dadurch gekennzeichnet,**
**daß** das Regalbediengerät (2) von einer Regaleinheit (I; II; III bzw. IV) in eine andere Regaleinheit (II, III, IV bzw. I, III, IV bzw. I, II, IV bzw. I, II, III) des gleichen Regals (1) oder eines anderen Regals (1') vertikal umgesetzt wird.

2. Verfahren nach Anspruch 1,
**dadurch gekennzeichnet,**
**daß** das Regalbediengerät (2) in eine andere Regaleinheit, welche noch kein gleichgeartetes Regalbediengerät besitzt, umgesetzt wird.

3. Verfahren nach Anspruch 1 oder 2,
**dadurch gekennzeichnet,**
**daß** das Regalbediengerät (2) über einen Vertikallift (4) von der einen Regaleinheit in eine andere Regaleinheit vertikal transportiert wird.

4. Verfahren nach einem der Ansprüche 1 bis 3,
**dadurch gekennzeichnet,**
**daß** das Regalbediengerät (2) von einem Regal (1) zu einem anderen Regal (1') vorzugsweise in einer vom Regalboden beabstandeten Höhenlage (h) auf einer Horizontalbahn (6) zwischen den Regalen (1, 1') horizontal verfahren wird.

5. Verfahren nach Anspruch 5,
**dadurch gekennzeichnet,**
**daß** die Horizontalbahn (6) vertikal verfahren wird.

6. Verfahren nach einem der Ansprüche 1 bis 5,
**dadurch gekennzeichnet,**
**daß** ein in der Höhe ausfahrbares Regalbediengerät (2) vor einem Umsetzen in eine kompakte flache eingefahrene Stellung (K) gebracht wird.

7. Verfahren nach einem der Ansprüche 1 bis 6,
**dadurch gekennzeichnet,**
**daß** das Regalbediengerät (2) vor einem Umsetzen mit Behältern (3) oder Tabletts bestückt wird, welche zusammen mit dem Regalbediengerät umgesetzt und nach einem Umsetzen des Regalbediengeräts in der anderen Regaleinheit eingebracht oder umgekehrt abgegeben werden.

8. Verfahren nach einem der Ansprüche 1 bis 6,
**dadurch gekennzeichnet,**
**daß** das Regalbediengerät (2) nach einem Umsetzen mit Behältern (3) oder Tabletts in der anderen Regaleinheit bestückt wird, wobei die einzubringenden Behälter (3) oder Tabletts über separate Fördermittel transportiert und erst in der anderen Regaleinheit von dem Regalbediengerät (2) für ein Einbringen in der anderen Regaleinheit Übernommen oder umgekehrt abgegeben werden.

9. Regalbediensystem zum Bedienen eines Regals, vorzugsweise in einer Kommissionieranlage, zur Durchführung des Verfahrens nach einem der Ansprüche 1 bis 8, wobei ein mehrere übereinander angeordnete Regalebenen (a, b, c, d) aufweisender Höhenbereich des Regals (2) als selbständige Regaleinheit (I, II, III, IV) über zumindest ein mechanisch angekoppeltes längsverstellbares Regalbediengerät (2) bedient werden kann,
**dadurch gekennzeichnet,**
**daß** eine Umsetzvorrichtung mit zumindest einem Vertikallift (4) für ein Umsetzen des Regalbediengeräts (2) von einer Regaleinheit (I, II, III bzw. IV) in eine andere Regaleinheit (II, III, IV bzw. I, III, IV bzw. I, II, IV bzw. I, II, III) des gleichen Regals (1) oder eines anderen Regals (1') vorgesehen ist.

10. Regalbediensystem nach Anspruch 9,
**dadurch gekennzeichnet,**
**daß** der Vertikallift (4) im Bereich des einen Längsendes des Regals (1) angeordnet ist.

11. Regalbediensystem nach Anspruch 9 oder 10,
**dadurch gekennzeichnet,**
**daß** der Vertikallift (4) Halte- und Feststellmittel für ein aufzunehmendes höhenzuversetzendes Regalbediengerät (2) aufweist.

12. Regalbediensystem nach Anspruch 10,
**dadurch gekennzeichnet,**
**daß** der Vertikallift (4) und/oder jedes dem Vertikallift zugewandte Längsende einer jeden Regaleinheit (I, II, III, IV) Arretierungsmittel aufweist, welche eine Regaleinheit (2) gegenüber dem Vertikallift (4) für eine sichere Aufnahme eines Regalbediengerätes in der Regaleinheit absperren, wenn der Vertikallift in anderer Höhenlage betrieben ist.

13. Regalbediensystem nach einem der Ansprüche 9 bis 12,
**dadurch gekennzeichnet,**
**daß** der Vertikallift (4) einen Liftkäfig (4') zur Aufnahme eines Regalbediengeräts (2) umfaßt, welcher zwischen zumindest zwei übereinander angeordneten Regaleinheiten (I, II, III, IV) höhenversetzbar und in Höhe der Regaleinheiten positionierbar ist.

14. Regalbediensystem nach einem der Ansprüche 9 bis 13,
**dadurch gekennzeichnet,**
**daß** zumindest ein weiterer Transportlift (5) für einen separaten Transport für Behälter (3) oder Tabletts vorgesehen ist, welcher vorzugsweise an einem Längsende des Regals (1) liegt.

15. Regalbediensystem nach einem der Ansprüche 9 bis 14,
**dadurch gekennzeichnet,**
**daß** eine Horizontalbahn (6) vorgesehen ist, auf welcher das Regalbediengerät (2) von einem Regal (1) zu einem anderen Regal (1') vorzugsweise in einer vom Regalboden beabstandeten Höhenlage (h) zwischen den Regalen horizontal verfahrbar oder die Horizontalbahn (6) zusammen mit dem Regalbediengerät (2) horizontal versetzbar ist.

16. Regalbediensystem nach Anspruch 15,
**dadurch gekennzeichnet,**
**daß** die Horizontalbahn (6) höhenverstellbar ist.

17. Regalbediensystem nach einem der Anspruch 9 bis 16,
**dadurch gekennzeichnet,**
**daß** das Regalbediengerät (2) untere und/oder obere Längsfahrwerke (12, 13) aufweist, welche in festen Horizontalschienen (10) in den Ebenen der Regaleinheiten (I, II, III, IV) kippsicher längs einer Regalfront verfahrbar sind, wobei die Horizontalschienen (10) integrierter Bestandteil des Regals sind.

18. Regalbediensystem nach Anspruch 17,
**dadurch gekennzeichnet,**
**daß** das Regalbediengerät (2) einen Vertikalmast (24) mit oberem und unterm Fahrwerk (12, 13) aufweist, wobei längs des Vertikalmastes (24) ein höhenverstellbares Lastaufnahmemittel (7) für Behälter (3) oder Tabletts vorgesehen ist.

19. Regalbediensystem nach Anspruch 18,
**dadurch gekennzeichnet,**
**daß** der Vertikalmast (24) ein Knickgelenk (20) aufweist, welches ein Auslenken des Masts in Richtung des Längsverfahrens (L) ermöglicht, wobei das Knickgelenk vorzugsweise im Bereich des oberen Fahrwerks (12) des Regalbediengeräts (2) vorgesehen ist.

20. Regalbediensystem nach Anspruch 18 oder 19,
**dadurch gekennzeichnet,**
**daß** der Vertikalmast (24) sich über die Höhe einer Regaleinheit (I, II, III, IV) erstreckt.

21. Regalbediensystem nach einem der Ansprüche 9 bis 17,
**dadurch gekennzeichnet,**
**daß** ein in der Höhe ausfahrbares Regalbediengerät (2) mit einer höhenversetzbaren Hubtisch (6) vorgesehen ist, welcher vor einem Umsetzen in eine kompakte flache Stellung (K) einfahrbar ist.

## Claims

1. A method for operating a shelf, preferably in a commissioning system, with a shelf (1) and an associated storage and retrieval unit (2) for retrieving and introducing containers (3), trays or the like from or into the shelf, wherein a height area of the shelf (1) having a plurality of shelf levels (a, b, c, d) arranged one on top of another can be operated as an independent shelf unit (I, II, III and IV) by means of at least one, mechanically coupled and longitudinally adjustable storage and retrieval unit (2), and at least two said independent shelf units (I, II, III and IV) are provided,
**characterized in that**
the storage and retrieval unit (2) is transferred vertically from one said shelf unit (I; II; II or IV) into an other shelf unit (II, II, IV or I, III, IV or I, II, IV or I, II, III) of the said same shelf (1) or of another said shelf (1').

2. A method in accordance with claim 1,
**characterized in that**
said storage and retrieval unit (2) is transferred into another said shelf unit, which does not yet have a storage and retrieval unit of the same type.

3. A method in accordance with claim 1 or 2,
**characterized in that**
said storage and retrieval unit (2) is transported vertically by means of a vertical elevator (4) from one said shelf unit into another said shelf unit.

4. A method in accordance with one of the claims 1 through 3,
**characterized in that**
said storage and retrieval unit (2) is displaced horizontally from one said shelf (1) to another said shelf (1') preferably in a height position (h) located at a spaced location from the shelf bottom on a said horizontal path (6) between the shelves (1,1').

5. A method in accordance with claim 4,
**characterized in that**
said horizontal path (6) is displaced vertically.

6. A method in accordance with one of the claims 1 through 5,
**characterized in that**
said storage and retrieval unit (2), which is vertically extensible, is brought into a compact, flat, withdrawn position (K) before transfer.

7. A method in accordance with one of the claims 1 through 6,
**characterized in that**
before transfer, said storage and retrieval unit (2) is equipped with containers (3) or trays, which are transferred together with said storage and retrieval unit and are introduced or, conversely, released after transferring said storage and retrieval unit in the other shelf unit.

8. A method in accordance with one of the claims 1 through 6,
**characterized in that**
said storage and retrieval unit (2) is equipped with containers (3) or trays in the other shelf unit after transfer, the containers (3) or trays to be introduced being transported by means of separate conveying means and being taken over by said storage and retrieval unit (2) for introduction into the other shelf unit or being, conversely, released in the other shelf unit only.

9. A storage and retrieval system for operating a said shelf, preferably in a said commissioning system, for carrying out the method in accordance with one of the claims 1 through 8, wherein a height area of the shelf (1) having a plurality of shelf levels (a, b, c, d) arranged one on top of another can be operated as an independent shelf unit (I, II, III, IV) by means of at least one, mechanically coupled and longitudinally adjustable storage and retrieval unit (2),
**characterized in that**
a transferring device with at least one vertical elevator (4) is provided for transferring the storage and retrieval unit (2) from one said shelf unit (I, II, III or IV) into another said shelf unit (II, III, IV or I, III, IV or I, II, IV or I, II, III) of the said same shelf (1) or of another said shelf (1').

10. A storage and retrieval system in accordance with claim 9,
**characterized in that**
said vertical elevator (4) is arranged in the area of one said longitudinal end of the shelf (1).

11. A storage and retrieval system in accordance with claim 9 or 10,
**characterized in that**
said vertical elevator (4) has holding and fixing means for a storage and retrieval unit (2), which is to be received and to be vertically displaced.

12. A storage and retrieval system in accordance with claim 10,
**characterized in that**
said vertical elevator (4) and/or each longitudinal end of each said shelf unit (I, II, III, IV) facing the vertical elevator has locking means, which blocks a said shelf unit in relation to the vertical elevator (4) for safely receiving a storage and retrieval unit in the shelf unit when the vertical elevator is being operated in another height position.

13. A storage and retrieval system in accordance with one of the claims 9 through 12,
**characterized in that**
said vertical elevator (4) comprises an elevator cage (4') for receiving a storage and retrieval unit (2), which can be displaced vertically between at least two said shelf units (I, II, III, IV) arranged one on top of another and can be positioned at the level of the shelf units.

14. A storage and retrieval system in accordance with one of the claims 9 through 13,
**characterized in that**
at least one other transport elevator (5) is provided for the separate transport of containers (3) or trays, which is preferably located at one longitudinal end of the said shelf (1).

15. A storage and retrieval system in accordance with one of the claims 9 through 14,
**characterized in that**
a horizontal path (6) is provided, on which the storage and retrieval unit (2) can be displaced horizontally between the shelves from one said shelf (1) to another said shelf (1') preferably in a height position (h) located at a spaced location from the shelf bottom or the horizontal path (6) can be displaced horizontally together with the storage and retrieval unit (2).

16. A storage and retrieval system in accordance with claim 15,
**characterized in that**
said horizontal path (6) is adjustable in height.

17. A storage and retrieval system in accordance with one of the claims 9 through 16,
**characterized in that**
said storage and retrieval unit (2) has a lower and/or upper longitudinal chassis (12, 13), which are displaceable along a shelf front in a nontilting manner in fixed horizontal rails (10) in the levels of the said shelf units (I, II, III, IV).

18. A storage and retrieval system in accordance with claim 17,
**characterized in that**
said storage and retrieval unit (2) has a vertical mast (24) with an upper and lower chassis (12, 13), wherein a height-adjustable load receiving means (7) for containers (3) or trays is provided along the vertical mast (24).

19. A storage and retrieval system in accordance with claim 18,
**characterized in that**
said vertical mast (24) has an articulated joint (20), which permits deflection of the mast in the direction of longitudinal displacement (L), the articulated joint being preferably provided in the area of the upper chassis (12) of the storage and retrieval unit (2).

20. A storage and retrieval system in accordance with claim 18 or 19,
**characterized in that**
said vertical mast (24) extends over the height of a shelf unit (I, II, III, IV).

21. A storage and retrieval system in accordance with one of the claims 9 through 17,
**characterized in that**
said storage and retrieval unit (2), which can be extended vertically, is provided with a height-adjustable lifting table (6) and can be withdrawn into a compact, flat position (K) before a transfer, is provided.

## Revendications

1. Procédé pour desservir un rayonnage, de préférence dans une installation de préparation des commandes, comprenant un rayonnage (1) et un appareil de desserte de rayonnage correspondant (2) pour la mise en stock et le prélèvement du stock de contenants (3), de tablettes ou similaires depuis ou dans le rayonnage, sachant qu'une zone de hauteur du rayonnage (1), présentant plusieurs niveaux de rayonnage (a, b, c, d) agencés les uns au-dessus des autres, peut être desservie comme unité de rayonnage autonome (I, II, III ou IV) par l'intermédiaire d'au moins un appareil de desserte de rayonnage (2) accouplé mécaniquement et réglable en longueur, et qu'au moins deux unités de rayonnage autonomes (I, II, III ou IV) sont prévues,
**caractérisé en ce**
**que** l'appareil de desserte de rayonnage (2) est transposé verticalement depuis une unité de rayonnage (I ; II ; III ou IV) jusque dans une autre unité de rayonnage (II, III, IV ou I, III, IV ou I, II, IV ou I, II, III) du même rayonnage (1) ou d'un autre rayonnage (1').

2. Procédé selon la revendication 1,
**caractérisé en ce**
**que** l'appareil de desserte de rayonnage (2) est transposé dans une autre unité de rayonnage qui ne possède encore aucun appareil de desserte de rayonnage du même type.

3. Procédé selon la revendication 1 ou 2,
**caractérisé en ce**
**que** l'appareil de desserte de rayonnage (2) est transporté verticalement depuis la une unité de rayonnage jusque dans une autre unité de rayonnage par l'intermédiaire d'un élévateur vertical (4).

4. Procédé selon l'une des revendications 1 à 3,
**caractérisé en ce**
**que** l'appareil de desserte de rayonnage (2) est transféré horizontalement entre les rayonnages (1, 1') sur une trajectoire horizontale (6), depuis un rayonnage (1) vers un autre rayonnage (1'), de préférence dans une position en hauteur (h) placée à distance du fond de rayonnage.

5. Procédé selon la revendication 4,
**caractérisé en ce**
**que** la trajectoire horizontale (6) est transférée verticalement.

6. Procédé selon l'une des revendications 1 à 5,
**caractérisé en ce**
**qu'**un appareil de desserte de rayonnage (2) pouvant être déployé en hauteur est amené dans une position compacte, plate et rétractée (K) avant une transposition.

7. Procédé selon l'une des revendications 1 à 6,
**caractérisé en ce**
**qu'**avant une transposition, l'appareil de desserte de rayonnage (2) est équipé de contenants (3) ou de tablettes qui sont transposés conjointement avec l'appareil de desserte de rayonnage et qui, après une transposition de l'appareil de desserte de rayonnage, sont amenés dans l'autre unité de rayonnage ou sont inversement prélevés depuis celle-ci.

8. Procédé selon l'une des revendications 1 à 6,
**caractérisé en ce**
**qu'**après une transposition, l'appareil de desserte de rayonnage (2) est équipé de contenants (3) ou de tablettes dans l'autre unité de rayonnage, sachant que les contenants (3) ou les tablettes à amener sont transportés par l'intermédiaire de moyens de convoyage séparés et sont pris en charge par l'appareil de desserte de rayonnage (2), seulement dans l'autre unité de rayonnage, pour une amenée dans l'autre unité de rayonnage ou sont inversement prélevés depuis celle-ci.

9. Système de desserte de rayonnage pour desservir un rayonnage, de préférence dans une installation de préparation des commandes, afin d'exécuter le procédé selon l'une des revendications 1 à 8, sachant qu'une zone de hauteur du rayonnage (1), présentant plusieurs niveaux de rayonnage (a, b, c, d) agencés les uns au-dessus des autres, peut être desservie comme unité de rayonnage autonome (I, II, III, IV) par l'intermédiaire d'au moins un appareil de desserte de rayonnage (2) accouplé mécaniquement et réglable en longueur,
**caractérisé en ce**
**qu'**un dispositif de transposition comprenant au moins un élévateur vertical (4) est prévu pour une transposition de l'appareil de desserte de rayonnage (2) depuis une unité de rayonnage (I, II, III ou IV) jusque dans une autre unité de rayonnage (II, III, IV ou I, III, IV ou I, II, IV ou I, II, III) du même rayonnage (1) ou d'un autre rayonnage (1').

10. Système de desserte de rayonnage selon la revendication 9,
**caractérisé en ce**
**que** l'élévateur vertical (4) est agencé dans la région de la une extrémité longitudinale du rayonnage (1).

11. Système de desserte de rayonnage selon la revendication 9 ou 10,
**caractérisé en ce**
**que** l'élévateur vertical (4) présente des moyens de maintien et de freinage pour un appareil de desserte de rayonnage (2) devant être réceptionné et déplacé en hauteur.

12. Système de desserte de rayonnage selon la revendication 10,
**caractérisé en ce**
**que** l'élévateur vertical (4) et/ou chaque extrémité longitudinale de chacune des unités de rayonnage (I, II, III, IV), tournée vers l'élévateur vertical, présente des moyens de blocage qui verrouillent une unité de rayonnage par rapport à l'élévateur vertical (4) pour une réception sûre d'un appareil de desserte de rayonnage dans l'unité de rayonnage lorsque l'élévateur vertical est en service dans une autre position en hauteur.

13. Système de desserte de rayonnage selon l'une des revendications 9 à 12,
**caractérisé en ce**
**que** l'élévateur vertical (4) comporte une cage d'élévateur (4') pour réceptionner un appareil de desserte de rayonnage (2), laquelle peut être déplacée en hauteur entre au moins deux unités de rayonnage (I, II, III, IV) agencées l'une au-dessus de l'autre et laquelle peut être positionnée à la hauteur des unités de rayonnage.

14. Système de desserte de rayonnage selon l'une des revendications 9 à 13,
**caractérisé en ce**
**qu'**au moins un autre élévateur de transport (5) est prévu pour un transport séparé pour des contenants (3) ou des tablettes, lequel se trouve de préférence sur une extrémité longitudinale du rayonnage (1).

15. Système de desserte de rayonnage selon l'une des revendications 9 à 14,
**caractérisé en ce**
**qu'**une trajectoire horizontale (6) est prévue, sur laquelle l'appareil de desserte de rayonnage (2) peut être transféré horizontalement depuis un rayonnage (1) vers un autre rayonnage (1'), entre les rayonnages, de préférence dans une position en hauteur (h) placée à distance du fond de rayonnage, ou en ce que la trajectoire horizontale (6) peut être déplacée horizontalement, conjointement avec l'appareil de desserte de rayonnage (2).

16. Système de desserte de rayonnage selon la revendication 15,
**caractérisé en ce**
**que** la trajectoire horizontale (6) est réglable en hauteur.

17. Système de desserte de rayonnage selon l'une des revendications 9 à 16,
**caractérisé en ce**
**que** l'appareil de desserte de rayonnage (2) présente des châssis de roulement longitudinaux inférieurs et/ou supérieurs (12, 13), lesquels sont déplaçables sur des rails horizontaux fixes (10) dans les niveaux des unités de rayonnage (I, II, III, IV) de manière stable au renversement le long d'une partie frontale de rayonnage, sachant que les rails horizontaux (10) font partie intégrante du rayonnage.

18. Système de desserte de rayonnage selon la revendication 17,
**caractérisé en ce**
**que** l'appareil de desserte de rayonnage (2) présente un mât vertical (24) muni d'un châssis de roulement supérieur et inférieur (12, 13), sachant qu'un moyen de réception de charge réglable en hauteur (7) est prévu le long du mât vertical (24) pour des contenants (3) ou des tablettes.

19. Système de desserte de rayonnage selon la revendication 18,
**caractérisé en ce**
**que** le mât vertical (24) présente une articulation de pliure (20) qui permet une déviation du mât en direction du transfert longitudinal (L), sachant que l'articulation de pliure (20) est prévue de préférence dans la région du châssis de roulement supérieur (12) de l'appareil de desserte de rayonnage (2).

20. Système de desserte de rayonnage selon la revendication 18 ou 19,
**caractérisé en ce**
**que** le mât vertical (24) s'étend sur la hauteur d'une unité de rayonnage (I, II, III, IV).

21. Système de desserte de rayonnage selon l'une des revendications 9 à 17,
**caractérisé en ce**
**qu'**un appareil de desserte de rayonnage (2) pouvant être déployé en hauteur et comportant une table de levage déplaçable en hauteur (6) est prévu, lequel peut être rétracté dans une position compacte plate (K) avant une transposition.
